(19) Europäisches Patentamt / European Patent Office / Office européen des brevets

(11) EP 2 978 098 A1

(12) EUROPEAN PATENT APPLICATION

(43) Date of publication:
27.01.2016 Bulletin 2016/04

(51) Int Cl.:
H02J 5/00 (2016.01)

(21) Application number: 15176219.2

(22) Date of filing: 10.07.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 11.07.2014 JP 2014143432

(71) Applicant: Funai Electric Co., Ltd.
Daito-shi,
Osaka 574-0013 (JP)

(72) Inventor: WAKABAYASHI, Naoyuki
Daito-shi, Osaka 574-0013 (JP)

(74) Representative: Grünecker Patent- und
Rechtsanwälte
PartG mbB
Leopoldstraße 4
80802 München (DE)

(54) POWER TRANSFER UNIT

(57) A power transfer unit (1, 201, 301, 401, 501) includes a power supply portion (13, 413), a power transfer portion (11), a voltage detector (17, 417), a power transfer current detector (18), and a controller (12, 212, 312, 412, 512), and the controller is configured to control a power transfer voltage value on the basis of an output voltage value detected by the voltage detector and an output current value detected by the power transfer current detector.

*FIG.2*

FIRST EMBODIMENT (SECOND EMBODIMENT)

**Description**

BACKGROUND OF THE INVENTION

Field of the Invention

The present invention relates to a power transfer unit, and more particularly, it relates to a power transfer unit including a power transfer coil.

Description of the Background Art

A power transfer unit including a power transfer coil is known in general, as disclosed in Japanese Patent Laying-Open No. 2002-272134, for example.

The aforementioned Japanese Patent Laying-Open No. 2002-272134 discloses a noncontact power transfer unit including a primary conductor (power transfer coil). This noncontact power transfer unit is provided with a power transfer circuit and a power receiving circuit. The power transfer circuit includes the primary conductor, a frequency controller that controls the frequency of high-frequency power supplied to the primary conductor, and a wireless communication portion capable of communicating with the power receiving circuit. The power receiving circuit receives high-frequency power from the primary conductor and includes a power receiving coil that supplies high-frequency power to a load, a resistance detection circuit that detects a resistance component of the load, and a wireless communication portion that transmits the detected resistance component of the load to the power transfer circuit. In this noncontact power transfer unit, the power transfer circuit acquires the resistance component of the load from the power receiving circuit through the wireless communication portion and controls the frequency of high-frequency power on the basis of the resistance component of the load. Thus, a reduction in the power factor of high-frequency power transferred from the power transfer circuit to the power receiving circuit is suppressed, and a reduction in the power transfer efficiency of high-frequency power is suppressed.

In the noncontact power transfer unit according to the aforementioned Japanese Patent Laying-Open No. 2002-272134, however, the wireless communication portion is required to be provided in each of the power transfer circuit (power transfer unit) and the power receiving circuit (receiver) to acquire the resistance component (load resistance value) of the load from the power receiving circuit (receiver). Thus, the structure of the noncontact power transfer unit and the noncontact power transfer system (the power transfer unit and the receiver) is complicated.

SUMMARY OF THE INVENTION

The present invention has been proposed in order to solve the aforementioned problem, and an object of the present invention is to provide a power transfer unit capable of suppressing a reduction in power transfer efficiency while suppressing complication of the structure.

In order to attain the aforementioned object, a power transfer unit according to a first aspect of the present invention includes a power supply portion, a power transfer portion that supplies power to an external device by power supplied by the power supply portion, a voltage detector that detects the output voltage value of the power supply portion, a power transfer current detector that detects the output current value of the power supply portion, and a controller that controls the power transfer voltage value of the power supply portion. The controller is configured to control the power transfer voltage value on the basis of the output voltage value detected by the voltage detector and the output current value detected by the power transfer current detector.

In the aforementioned power transfer unit according to the first aspect, as hereinabove described, the controller is configured to control the power transfer voltage value on the basis of the voltage value detected by the voltage detector and the current value detected by the power transfer current detector. Thus, a load resistance value can be estimated without providing a wireless communication portion in each of the power transfer unit and the external device (receiver) to acquire the load resistance value from the receiver. Consequently, a reduction in the power transfer efficiency can be suppressed while complication of the structure of the power transfer unit is suppressed.

In the aforementioned power transfer unit according to the first aspect, the controller preferably is configured to estimate the load resistance value of the external device on the basis of the output voltage value and the output current value. According to this structure, a reduction in the power transfer efficiency can be suppressed while complication of the structure of the power transfer unit is suppressed using an estimation result of the load resistance value.

In the aforementioned power transfer unit according to the first aspect, the controller preferably is configured to calculate the load power value of the external device by multiplying the output voltage value by the output current value, estimate the load resistance value of the external device by the following formulas (1) to (3) in which the square of the load voltage value of the external device proportional to the output voltage value is divided by the load power value of the external device, and control the power transfer voltage value such that the load resistance value $R_L$ that is estimated becomes a prescribed load resistance value.

$$V_t \times I_t = P_L \dots (1)$$

$$V_t = \alpha \times V_L \dots (\alpha: \text{constant}) \dots (2)$$

$$V_L{}^2/P_L = R_L \dots (3)$$

According to this structure, the load resistance value $R_L$ of the external device (receiver) can be easily estimated by the aforementioned formulas (1) to (3).

In this case, the controller preferably is configured to estimate the load resistance value $R_L$ of the external device on the basis of the following formula (4) where the output voltage value $V_t$, the output current value It, and a constant $\alpha$ are employed.

$$R_L = (1/\alpha^2) \times (V_t/I_t) \dots (4)$$

According to this structure, the load resistance value $R_L$ of the external device (receiver) can be more easily estimated by the aforementioned formula (4).

In the aforementioned power transfer unit in which the load resistance value $R_L$ of the external device is estimated by the aforementioned formulas (1) to (3), the controller preferably is configured to estimate the load resistance value $R_L$ of the external device on the basis of the following formula (5) where the output voltage value $V_t$, the output current value It, a constant $\beta$, and a power transfer efficiency value $\eta$ from the power supply portion to the external device are employed.

$$R_L = (1/(\eta \cdot \beta^2)) \times (V_t/I_t) \dots (5)$$

According to this structure, the load resistance value $R_L$ of the external device can be estimated in consideration of the power transfer efficiency value $\eta$, and hence the load resistance value $R_L$ can be more accurately estimated.

In the aforementioned power transfer unit in which the load resistance value of the external device is estimated, the controller preferably is configured to set the product of the load resistance value of the external device that is estimated and the output current value as the power transfer voltage value. According to this structure, the power transfer voltage value can be easily properly set simply by calculating the product of the load resistance value and the output current value.

In the aforementioned power transfer unit in which the load resistance value of the external device is estimated, the controller preferably is configured to determine that a load of the external device is in an abnormal state when the load power value of the external device obtained by multiplying the output voltage value $V_t$ by the output current value It is at least a prescribed power value and the load resistance value that is estimated is not more than a prescribed minimum resistance value. When the load of the external device is in the abnormal state (such as when the load is short-circuited), the load power value is relatively large while the load resistance value is relatively small. According to the aforementioned structure, abnormality of the load of the external device (receiver) can be easily detected.

In the aforementioned power transfer unit in which the load resistance value of the external device is estimated, the controller preferably is configured to control the output voltage value on the basis of a previously set power transfer efficiency from the power supply portion to the external device such that the load resistance value of the external device becomes a prescribed load resistance value. According to this structure, the load resistance value (load power value) of the external device can be more accurately estimated, and hence a reduction in the power transfer efficiency can be more reliably suppressed.

In the aforementioned power transfer unit in which the load resistance value of the external device is estimated, the power transfer portion preferably includes a power transfer coil and a resonance capacitor connected to the power transfer coil. The power transfer unit preferably further includes a coil current detector that detects a coil current value that is a current value of current that flows into the power transfer coil and the resonance capacitor, and the controller preferably is configured to estimate the load power value of the external device by multiplying the output voltage value by the output current value and determine whether or not to estimate the load resistance value of the external device on the basis of the load power value and the coil current value. When the external device is not arranged at the prescribed arrangement position, the load power value is relatively small while the coil current value is relatively large. According to the aforementioned structure, it is detected whether or not the external device is arranged at the prescribed arrangement position, and the controller can determine not to estimate the load resistance value of the external device when the external device is not arranged at the prescribed arrangement position.

In this case, the resonance capacitor is preferably connected in series to the power transfer coil, and the controller preferably is configured not to estimate the load resistance value of the external device but determine that the external device is not arranged at a prescribed arrangement position when the load power value that is estimated is not more than a prescribed power value and the coil current value is at least a prescribed current value. According to this structure, the controller can easily determine whether or not the external device is arranged at the prescribed arrangement position by comparing the load power value that is estimated with the prescribed power value and comparing the coil current value with the prescribed current value.

In the aforementioned power transfer unit in which the resonance capacitor is connected in series to the power transfer coil, the controller preferably is configured to increase the power transfer voltage value when the coil current value is less than the prescribed current value. According to this structure, when the coil current value is less than the prescribed current value and transferred power is insufficient, the controller can increase the transferred power by increasing the power transfer voltage value.

In the aforementioned power transfer unit in which the load resistance value of the external device is estimated, the controller preferably is configured to control the power transfer voltage value such that the load resistance value that is estimated becomes a prescribed load resistance value, and the prescribed load resistance value is preferably a resistance value at which a power transfer efficiency value from the power supply portion to the external device is in the vicinity of a maximum value. According to this structure, the power transfer voltage value is controlled such that the load resistance value that is estimated becomes the prescribed load resistance value, whereby the power transfer efficiency can be in the vicinity of the maximum value.

In the aforementioned power transfer unit in which the load resistance value of the external device is estimated, the controller preferably is configured to control the power transfer voltage value such that the load power value of the external device obtained by multiplying the output voltage value $V_t$ by the output current value It is less than a prescribed power value or the load resistance value that is estimated exceeds a prescribed minimum resistance value.

In the aforementioned power transfer unit in which the load resistance value of the external device is estimated, the controller preferably is configured to increase the power transfer voltage value when the load resistance value that is estimated is smaller than a prescribed load resistance value and reduce the power transfer voltage value when the load resistance value that is estimated is larger than the prescribed load resistance value. According to this structure, the power transfer voltage value can be easily controlled.

In the aforementioned power transfer unit in which the load resistance value of the external device is estimated, the controller preferably is configured to estimate the load resistance value of the external device by a table that shows a correspondence relationship between both the output voltage value and the output current value and the load resistance value of the external device. According to this structure, the controller can estimate the load resistance value of the external device simply by referring to the table without performing a relatively complicated calculation.

A power transfer system according to a second aspect of the present invention includes a power transfer unit including a power supply portion, a power transfer portion that supplies power by power supplied by the power supply portion, a voltage detector that detects the output voltage value of the power supply portion, a power transfer current detector that detects the output current value of the power supply portion, and a controller that controls the power transfer voltage value of the power supply portion and a receiver including a power receiving portion that receives power from the power transfer portion and a power converter that converts the voltage value of the power received by the power receiving portion to a prescribed voltage value. The controller is configured to control the power transfer voltage value on the basis of the output voltage value detected by the voltage detector and the output current value detected by the power transfer current detector.

In the power transfer system according to the second aspect of the present invention, as hereinabove described, the controller of the power transfer unit is configured to control the power transfer voltage value on the basis of the output voltage value detected by the voltage detector and the output current value detected by the power transfer current detector. Thus, also in the power transfer system according to the second aspect, a reduction in the power transfer efficiency can be suppressed while complication of the structure is suppressed.

In the aforementioned power transfer system according to the second aspect, the controller preferably is configured to estimate the load resistance value of the receiver on the basis of the output voltage value and the output current value. According to this structure, a reduction in the power transfer efficiency can be suppressed while complication of the structure of the power transfer unit is suppressed using an estimation result of the load resistance value.

In the aforementioned power transfer system according to the second aspect, the controller preferably is configured to calculate the load power value $P_L$ of the receiver by multiplying the output voltage value $V_t$ by the output current value It, estimate the load resistance value $R_L$ of the receiver by the following formulas (6) to (8) in which the square of the load voltage value $V_L$ of the receiver proportional to the output voltage value $V_t$ is divided by the load power value $P_L$ of the receiver, and control the power transfer voltage value such that the load resistance value $R_L$ that is estimated becomes a prescribed load resistance value.

$$V_t \times I_t = P_L \dots (6)$$

$$V_t = \alpha \times V_L \dots (\alpha: \text{constant}) \dots (7)$$

$$V_L^2/P_L = R_L \dots (8)$$

According to this structure, the load resistance value $R_L$ of the receiver can be easily estimated by the aforementioned formulas (6) to (8).

In this case, the controller preferably is configured to estimate the load resistance value $R_L$ of the receiver on the basis of the following formula (9) where the output voltage value $V_t$, the output current value It, and a constant $\alpha$ are employed.

$$R_L = (1/\alpha^2) \times (V_t/I_t) \dots (9)$$

According to this structure, the load resistance value $R_L$ of the receiver can be more easily estimated by the aforementioned formula (9).

In the aforementioned power transfer system in which the load resistance value $R_L$ of the receiver is estimated by the aforementioned formulas (6) to (8), the controller preferably is configured to estimate the load resistance value $R_L$ of the receiver on the basis of the following formula (10) where the output voltage value $V_t$, the output current value It, a constant $\beta$, and a power transfer efficiency value $\eta$ from the power supply portion to the receiver are employed.

$$R_L = (1/(\eta \cdot \beta^2)) \times (V_t/I_t) \dots (10)$$

According to this structure, the load resistance value $R_L$ of the receiver can be estimated in consideration of the power transfer efficiency value $\eta$, and hence the load resistance value $R_L$ can be more accurately estimated.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 illustrates the overall structure of a wireless power transfer system according to first to fourth embodiments of the present invention;
Fig. 2 is a block diagram showing the structure of a power transfer unit according to the first and second embodiments of the present invention;
Fig. 3 is a block diagram showing the structure of a receiver according to the first embodiment of the present invention;
Fig. 4 illustrates the relationship between a load resistance value and a power transfer efficiency value according to the first embodiment of the present invention;
Fig. 5 illustrates the relationship between a power transfer voltage value and a load voltage value according to the first embodiment of the present invention;
Fig. 6 illustrates the relationship between a load power value and the load voltage value according to the first embodiment of the present invention;

Fig. 7 is a flowchart for illustrating control processing of the power transfer voltage value according to the first embodiment of the present invention;

Fig. 8 is a block diagram showing the structure of a power transfer unit according to a third embodiment of the present invention;

Fig. 9 is a block diagram showing the structure of a power transfer unit according to a fourth embodiment of the present invention;

Fig. 10 is a block diagram showing the structure of a power transfer unit according to a modification of the first embodiment of the present invention; and

Fig. 11 is a table according to the modification of the first embodiment of the present invention.

DESCRIPTION OF THE PREFERRED EMBODIMENTS

Embodiments of the present invention are now described with reference to the drawings.

(First Embodiment)

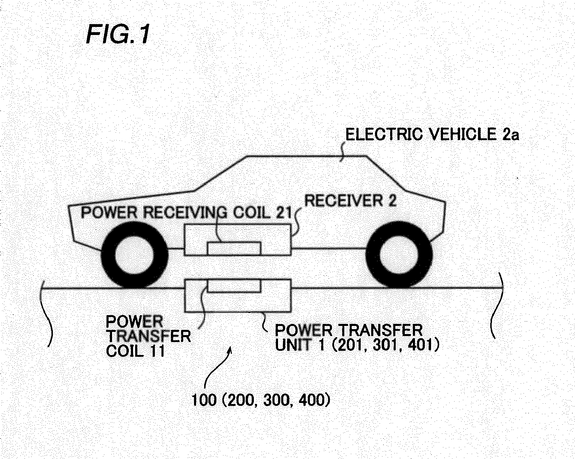

The structure of a wireless power transfer system 100 according to a first embodiment of the present invention is described with reference to Figs. 1 to 6.

The wireless power transfer system 100 according to the first embodiment of the present invention is provided with a power transfer unit 1, as shown in Fig. 1. The power transfer unit 1 is arranged on the ground or the like. The power transfer unit 1 includes a power transfer coil 11, and the power transfer coil 11 is arranged on a side (upper side) of the power transfer unit 1 closer to a receiver 2 described later. The power transfer unit 1 can wirelessly supply (transfer) power to the receiver 2 without a wire or the like. The wireless power transfer system 100 is an example of the "power transfer system" in the present invention. The power transfer coil 11 is an example of the "power transfer portion" in the present invention. The receiver 2 is an example of the "external device" in the present invention.

The wireless power transfer system 100 is provided with the receiver 2. The receiver 2 is arranged inside an electric vehicle 2a. The electric vehicle 2a is brought to a stop near (over) a position where the power transfer unit 1 is arranged. A power receiving coil 21 is provided on a side (ground side) of the receiver 2 closer to the power transfer unit 1. The power transfer coil 11 and the power receiving coil 21 face each other in a state where the electric vehicle 2a is brought to a stop near (over) the power transfer unit 1. The power receiving coil 21 is an example of the "power receiving portion" in the present invention.

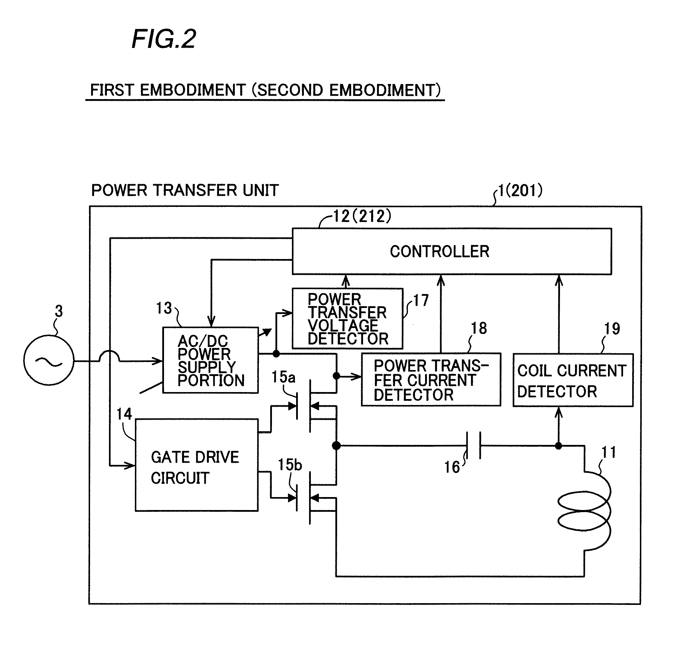

As shown in Fig. 2, the power transfer unit 1 is provided with a controller 12. The controller 12 includes a CPU (central processing unit), an oscillation circuit, etc. The CPU totally controls the power transfer unit 1, as described later. The oscillation circuit outputs a high frequency (6.78 MHz, for example) drive signal on the basis of a command from the CPU.

The power transfer unit 1 is provided with an AC/DC (alternate current/direct current) power supply portion 13. The AC/DC power supply portion 13 acquires AC power from a commercial power supply 3 provided outside and rectifies the acquired power to DC. The AC/DC power supply portion 13 can change the voltage value $V_t$ of power transferred to the receiver 2 on the basis of a command from the controller 12. The AC/DC power supply portion 13 is an example of the "power supply portion" in the present invention. The voltage value $V_t$ is an example of the "output voltage value" or the "power transfer voltage value" in the present invention.

The power transfer unit 1 is provided with a gate drive circuit 14. The gate drive circuit 14 is connected to N-type FETs (field effect transistors) 15a and 15b capable of turning on and off a DC voltage from the AC/DC power supply portion 13. The gate drive circuit 14 acquires a drive signal of the resonant frequency (6.78 MHz, for example) of a resonance capacitor 16 described later and the power transfer coil 11 from the oscillation circuit of the controller 12 and turns on and off the FETs 15a and 15b such that one of the FETs 15a and 15b is turned on and the other of the FETs 15a and 15b is turned off according to the acquired drive signal. The gate drive circuit 14 is an example of the "power supply portion" in the present invention. The FETs 15a and 15b are examples of the "power supply portion" in the present invention.

More specifically, when the FET 15a is turned on, the FET 15b is turned off such that a voltage is applied from the AC/DC power supply portion 13 to the power transfer coil 11. When the FET 15a is turned off, the FET 15b is turned on such that a voltage applied to the power transfer coil 11 is reduced to zero. In other words, the gate drive circuit 14 is constructed as a so-called half bridge circuit, converts a DC voltage from the AC/DC power supply portion 13 into an AC voltage (a rectangular wave having a voltage value $+V_t$ and a voltage value 0) having the resonant frequency, and outputs the AC voltage to the resonance capacitor 16 and the power transfer coil 11.

The power transfer unit 1 is provided with the resonance capacitor 16. The resonance capacitor 16 is connected in series to the power transfer coil 11 and resonates in series (the impedance is minimized) when an AC voltage having the resonant frequency is applied.

An AC voltage having the resonant frequency is applied to the power transfer coil 11 such that an alternating current flows into the power transfer coil 11, whereby a power transfer magnetic field is generated.

According to the first embodiment, the power transfer unit 1 is provided with a power transfer voltage detector 17, as shown in Fig. 2. The power transfer voltage detector 17 is configured to be capable of detecting a voltage value $V_t$ on the output side of the AC/DC power supply portion 13 and on the drain side of the FET 15a. The power transfer voltage detector 17 is configured to transmit information about the detected voltage value $V_t$ to the controller 12. The power transfer voltage detector 17 is an example of the "voltage detector" in the present invention.

According to the first embodiment, the power transfer unit 1 is provided with a power transfer current detector 18. The power transfer current detector 18 is configured to be capable of detecting the current value It of current that flows from the output side of the AC/DC power supply portion 13 to the drain side of the FET 15a. The power transfer current detector 18 is configured to transmit information about the detected current value It to the controller 12. The current value It is an example of the "output current value" in the present invention.

According to the first embodiment, the power transfer unit 1 is provided with a coil current detector 19. The coil current detector 19 can detect the current value $I_c$ of current that flows into the power transfer coil 11 and the resonance capacitor 16. The coil current detector 19 transmits information about the detected current value $I_c$ to the controller 12.

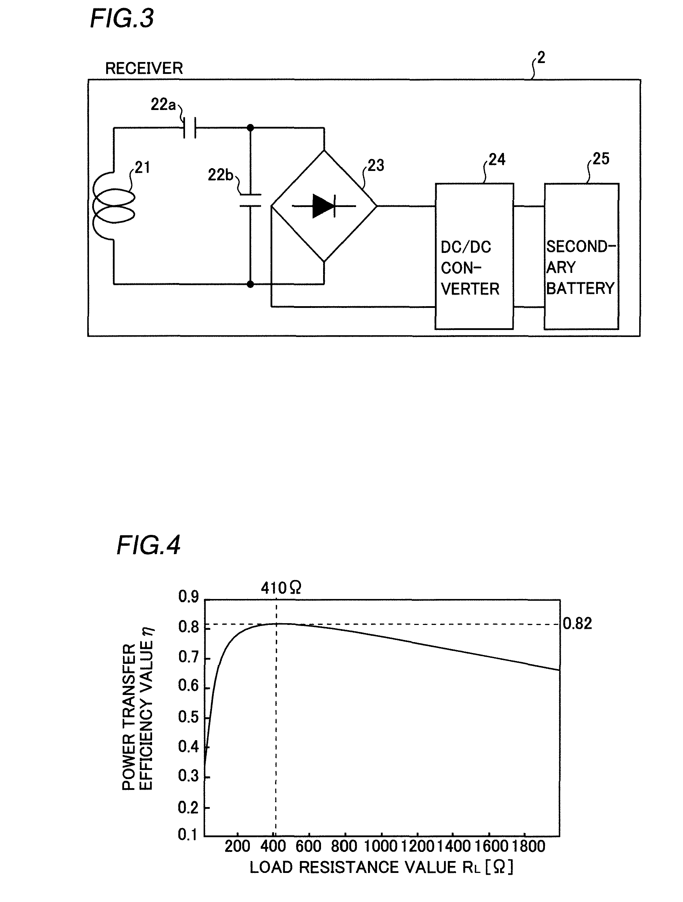

As shown in Fig. 3, the receiver 2 is provided with the power receiving coil 21, as described above. The power receiving coil 21 receives power by the power transfer magnetic field generated by the power transfer coil 11.

The receiver 2 is provided with resonance capacitors 22a and 22b. The resonance capacitor 22a is connected in series to the power receiving coil 21. The resonance capacitor 22b is connected in parallel to the power receiving coil 21. The capacitance of the resonance capacitors 22a and 22b is set to a value at which a power transfer efficiency value $\eta$ is maximized when the load resistance value $R_L$ of the receiver 2 becomes an optimum load resistance value $R_O$ described later. The resonant frequency of the power receiving coil 21 and the resonance capacitors 22a and 22b has substantially the same value as the resonant frequency of the power transfer coil 11 and the resonance capacitor 16. In other words, power can be transferred between the power transfer unit 1 and the receiver 2 by a so-called magnetic resonance method.

The receiver 2 is provided with a rectifier circuit 23. The rectifier circuit 23 includes a plurality of diodes etc. and rectifies the alternating current of power received by the power receiving coil 21 to direct current.

According to the first embodiment, the receiver 2 is provided with a DC/DC converter 24. The DC/DC converter 24 converts the voltage value of the rectified direct current into the voltage value of a constant direct current suitable for charging a secondary battery 25 described later. The DC/DC converter 24 is an example of the "power converter" in the present invention.

The receiver 2 is provided with the secondary battery 25. The secondary battery 25 is charged with power supplied from the DC/DC converter 24.

According to the first embodiment, the controller 12 is configured to control a power transfer voltage value $V_t$ on the basis of the voltage value $V_t$ detected by the power transfer voltage detector 17 and the current value It detected by the power transfer current detector 18.

Specifically, according to the first embodiment, the controller 12 is configured to estimate (calculate) the load resistance value $R_L$ of the receiver 2 on the basis of the voltage value $V_t$ detected by the power transfer voltage detector 17 and the current value It detected by the power transfer current detector 18 and control the power transfer voltage value $V_t$ such that the estimated load resistance value $R_L$ becomes the optimum load resistance value $R_O$. In other words, the controller 12 is configured to control the power transfer voltage value $V_t$ to bring the estimated (calculated) load resistance value $R_L$ to the optimum load resistance value $R_O$.

The optimum load resistance value $R_O$ is a resistance value at which the power transfer efficiency value $\eta$ from the AC/DC power supply portion 13 to the receiver 2 is maximized or in the vicinity of a maximum value (power transfer efficiency value $\eta_O$). The load resistance value $R_L$ represents a resistance value on the input side of the DC/DC converter 24 of the receiver 2. The optimum load resistance value $R_O$ is an example of the "prescribed load resistance value" in the present invention.

Specifically, the load resistance value $R_L$ and the power transfer efficiency value $\eta$ have such a relationship that the power transfer efficiency value $\eta$ is maximized (power transfer efficiency value $\eta_O$) at the optimum load resistance value $R_O$, as shown in Fig. 4.

In an example shown in Fig. 4, for example, calculation results in the case where the drive frequency (resonant frequency) is 6.78 MHz, the impedances of both the power transfer coil 11 and the power receiving coil 21 are 1 $\mu$H, the Q values of both the power transfer coil 11 and the power receiving coil 21 are 100, and the coupling coefficient is 0.1 when the power transfer voltage value $V_t$ is constant are shown. In this example, the optimum load resistance value $R_O$ is 410 $\Omega$, and the power transfer efficiency value $\eta_O$ is 0.82.

The controller 12 is configured to calculate a transferred power value $P_t$ by multiplying the power transfer voltage value $V_t$ by the transferred power current value It. Assuming that the transferred power value $P_t$ is equal to a received power value (load power value $P_L$) (there is no loss), the controller 12 is configured to estimate (calculate) the load power value $P_L$ on the basis of the power transfer voltage value $V_t$ and the transferred power current value It, using the following formula (11).

$$V_t \times I_t = P_t = P_L \ldots (11)$$

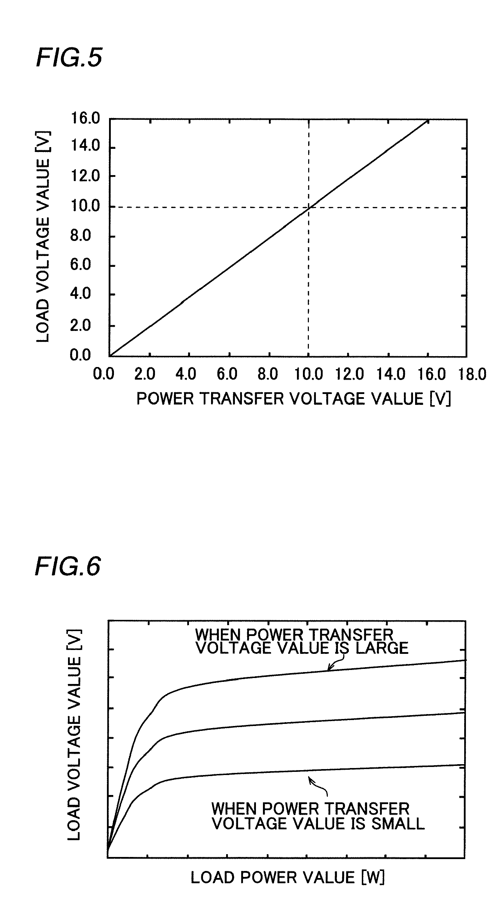

As shown in Fig. 5, the power transfer voltage value $V_t$ and a load voltage value $V_L$ bear a proportionate relationship to each other. In other words, the power transfer voltage value $V_t$ and the load voltage value $V_L$ have a relationship of the following formula (12) where $\alpha$ is a constant and has a value that varies according to the structure (or a combination or the like) of the power transfer unit 1 and the receiver 2.

$$V_t = \alpha \times V_L \ldots (\alpha: \text{constant}) \ldots (12)$$

In an example shown in Fig. 5, for example, when $\alpha$ is 1 and the power transfer voltage value $V_t$ is 10 V, the load voltage value $V_L$ is 10 V.

As shown in Fig. 6, the load voltage value $V_L$ is increased as the load power value $P_L$ is increased when the load power value $P_L$ is relatively small. When the load power value $P_L$ is relatively large, the load voltage value $V_L$ is substantially constant regardless of the magnitude of the load power value $P_L$. In the wireless power transfer system 100, the load power value $P_L$ is set (the load power value $P_L$ is set to be relatively large) such that the load voltage value $V_L$ is substantially constant regardless of the magnitude of the load power value $P_L$. Due to this relationship, the controller 12 can estimate the load resistance value $R_L$ by dividing the square of the load voltage value $V_L$ by the load power value $P_L$. More specifically, the following formula (13) is satisfied.

$$V_L{}^2/P_L = R_L \ldots (13)$$

The following formula (14) can be derived from the aforementioned formulas (11) to (13).

$$R_L = (1/\alpha^2) \times (V_t/I_t) \ldots (14)$$

The controller 12 is configured to compare the estimated load resistance value $R_L$ with the aforementioned optimum load resistance value $R_O$ (410 $\Omega$). The controller 12 is configured to increase the power transfer voltage value $V_t$ when the estimated load resistance value $R_L$ is smaller than the optimum load resistance value $R_O$. When the estimated load resistance value $R_L$ is larger than the optimum load resistance value $R_O$, on the other hand, the controller 12 is configured to reduce the power transfer voltage value $V_t$. Thus, the controller 12 is configured to control the power transfer voltage value $V_t$ such that the estimated load resistance value $R_L$ becomes the optimum load resistance value $R_O$.

When $\alpha = 1$, the controller 12 is configured to set the product of the estimated load resistance value $R_L$ of the receiver 2 and the current value It as the power transfer voltage value $V_t$.

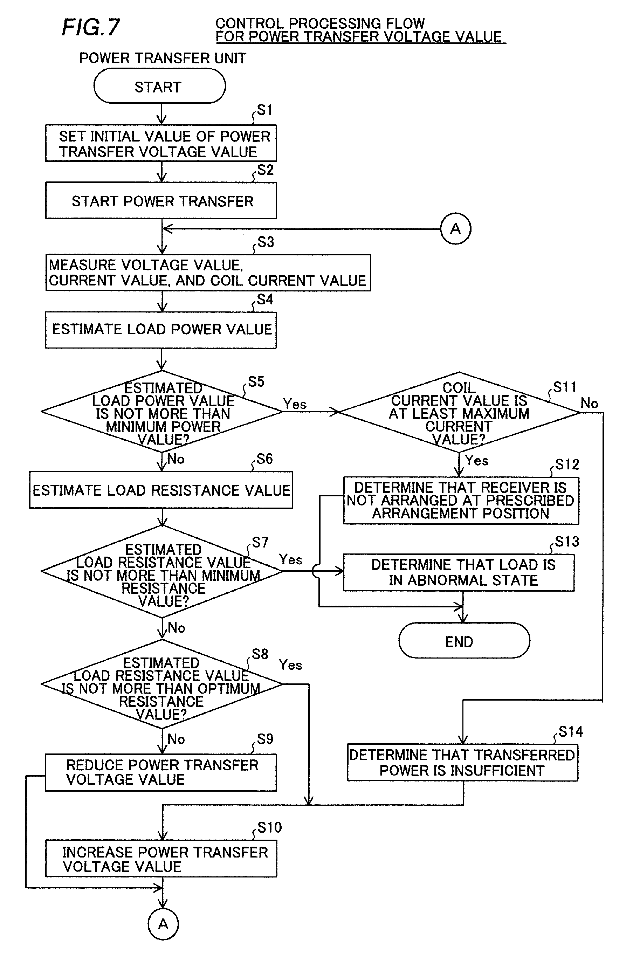

Control processing of the power transfer voltage value in the wireless power transfer system 100 according to the first embodiment is now described with reference to Fig. 7. Processing in the power transfer unit 1 is performed by the controller 12.

The controller 12 sets an initial value of the power transfer voltage value $V_t$ at a step S1, as shown in Fig. 7. Then, the controller 12 advances to a step S2.

At the step S2, the controller 12 starts power transfer. More specifically, the controller 12 transfers power, setting the power transfer voltage value $V_t$ as 5 V when the initial value of the power transfer voltage value $V_t$ is set to 5 V at the step S1. Then, the controller 12 advances to a step S3.

At the step S3, the controller 12 measures the power transfer voltage value $V_t$, the transferred power current value It, and a coil current value $I_c$. Then, the controller 12 advances to a step S4.

At the step S4, the controller 12 estimates the load power value $P_L$. More specifically, the controller 12 estimates (calculates) the load power value $P_L$ by the aforementioned formula (11). Then, the controller 12 advances to a step S5.

At the step S5, the controller 12 determines whether or not the load power value $P_L$ estimated at the step S4 is not more than a minimum power value $P_A$. When determining that the estimated load power value $P_L$ is not more than the minimum power value $P_A$, the controller 12 advances to a step S11, and when determining that the estimated load power value $P_L$ is more than the minimum power value $P_A$, the controller 12 advances to a step S6. The minimum power value $P_A$ is an example of the "prescribed power value" in the present invention.

At the step S6, the controller 12 estimates the load resistance value $R_L$. More specifically, the controller 12 estimates (calculates) the load resistance value $R_L$ by the aforementioned formulas (11) to (14). Then, the controller 12 advances to a step S7.

At the step S7, the controller 12 determines whether or not the estimated load resistance value $R_L$ is not more than a minimum resistance value $R_A$. When determining that the estimated load resistance value $R_L$ is not more than the minimum resistance value $R_A$, the controller 12 advances to a step S13, and when determining that the estimated load resistance value $R_L$ is more than the minimum resistance value $R_A$, the controller 12 advances to a step S8.

At the step S8, the controller 12 determines whether or not the estimated load resistance value $R_L$ is not more than the optimum resistance value $R_O$. When determining that the estimated load resistance value $R_L$ is not more than the optimum resistance value $R_O$, the controller 12 advances to a step S10, and when determining that the estimated load resistance value $R_L$ is more than the optimum resistance value $R_O$, the controller 12 advances to a step S9.

At the step S9, the controller 12 reduces the power transfer voltage value $V_t$. When the power transfer voltage value $V_t$ is 5.0 V, for example, the controller 12 changes the power transfer voltage value $V_t$ to 4.9 V, and when the power transfer voltage value $V_t$ is 4.9 V, the controller 12 changes the power transfer voltage value $V_t$ to 4.8 V. Then, the controller 12 returns to the step S3.

When determining that the estimated load resistance value $R_L$ is not more than the optimum resistance value $R_O$ at the step S8 or after processing at a step S14 described later, the controller 12 increases the power transfer voltage value $V_t$ at the step S10. When the power transfer voltage value $V_t$ is 5.0 V, for example, the controller 12 changes the power transfer voltage value $V_t$ to 5.1 V, and when the power transfer voltage value $V_t$ is 5.1 V, the controller 12 changes the power transfer voltage value $V_t$ to 5.2 V. Then, the controller 12 returns to the step S3.

According to the first embodiment, when determining that the estimated load power value $P_L$ is not more than the minimum power value $P_A$ and the coil current value $I_c$ is at least a maximum current value $I_A$, the controller 12 does not estimate the load resistance value $R_L$ but determines that the receiver 2 is not arranged at a prescribed arrangement position (the electric vehicle 2a is brought to a stop at a prescribed stop position). The maximum current value $I_A$ is an example of the "prescribed current value" in the present invention. The above case is now specifically described.

When determining that the estimated load power value $P_L$ is not more than the minimum power value $P_A$ at the step S5, the controller 12 determines whether or not the coil current value $I_c$ is at least the maximum current value $I_A$ at the step S11. The power transfer coil 11 and the resonance capacitor 16 resonate in series, and hence the impedance of a circuit including the power transfer coil 11 and the resonance capacitor 16 is substantially zero when the receiver 2 is not arranged at the prescribed arrangement position. Thus, the coil current value $I_c$ becomes at least the maximum current value $I_A$. When receiver 2 is arranged at the prescribed arrangement position, on the other hand, the impedance of the circuit including the power transfer coil 11 and the resonance capacitor 16 is relatively large. Thus, the coil current value $I_c$ becomes less than the maximum current value $I_A$. When determining that the coil current value $I_c$ is at least the maximum current value $I_A$, the controller 12 advances to a step S12, and when determining that the coil current value $I_c$ is not at least the maximum current value $I_A$, the controller 12 advances to the step S14.

At the step S12, the controller 12 determines that the receiver is not arranged at the prescribed arrangement position (the electric vehicle 2a is brought to a stop at the prescribed stop position). Then, the controller 12 terminates the control processing of the power transfer voltage value in the wireless power transfer system 100. More specifically, the controller 12 does not estimate the load resistance value $R_L$ but terminates power transfer from the power transfer unit 1 to the receiver 2.

When determining that the coil current value $I_c$ is not at least the maximum current value $I_A$ at the step S11, the controller 12 determines that transferred power is insufficient at the step S14. More specifically, when transferred power is insufficient, the coil current value $I_c$ is less than the maximum current value $I_A$ if the estimated load power value $P_L$ is not more than the minimum power value $P_A$ and the receiver 2 is arranged at the prescribed arrangement position.

Then, the controller 12 advances to the step S10. Specifically, the controller 12 performs processing for compensating for the shortage of power by increasing the power transfer voltage value at the step S10. More specifically, the controller 12 increases the power transfer voltage value $V_t$ when the coil current value $I_c$ is less than the maximum current value $I_A$.

According to the first embodiment, the controller 12 determines that the load (such as the secondary battery 25) of the receiver 2 is in an abnormal state when the estimated load power value $P_A$ is at least the minimum power value $P_A$ and the estimated load resistance value $R_L$ is not more than the minimum resistance value $R_A$. This case is now specifically described.

When determining that the estimated load resistance value $R_L$ is not more than the minimum resistance value $R_A$ at the step S7, the controller 12 determines that the load of the receiver 2 is in the abnormal state at the step S13. When the load of the receiver 2 is short-circuited, for example, the resistance value of the load is substantially zero, and hence the estimated load resistance value $R_L$ is also substantially zero. Then, the controller 12 terminates the control processing of the power transfer voltage value in the wireless power transfer system 100. More specifically, the controller 12 terminates power transfer from the power transfer unit 1 to the receiver 2.

According to the first embodiment, the following effects can be obtained.

According to the first embodiment, as hereinabove described, the controller 12 of the power transfer unit 1 is configured to estimate the load resistance value $R_L$ of the receiver 2 on the basis of the voltage value $V_t$ detected by the power transfer voltage detector 17 and the current value It detected by the power transfer current detector 18. Furthermore, the controller 12 is configured to control the power transfer voltage value $V_t$ such that the estimated load resistance value $R_L$ becomes the optimum load resistance value $R_O$. Moreover, the controller 12 preferably is configured to increase the power transfer voltage value $V_t$ when the estimated load resistance value $R_L$ is smaller than the optimum load resistance value $R_O$ and reduce the power transfer voltage value $V_t$ when the estimated load resistance value $R_L$ is larger than the optimum load resistance value $R_O$. Thus, the load resistance value $R_L$ can be estimated without providing a wireless communication portion in each of the power transfer unit 1 and the receiver 2 to acquire the load resistance value $R_L$ from the receiver 2. Consequently, a reduction in the power transfer efficiency value $\eta$ can be suppressed while complication of the structure of the wireless power transfer system 100 (the power transfer unit 1 and the receiver 2) is suppressed.

According to the first embodiment, as hereinabove described, the controller 12 of the power transfer unit 1 is configured to calculate the load power value $P_L$ of the receiver 2 by multiplying the power transfer voltage value $V_t$ by the transferred power current value It, estimate the load resistance value $R_L$ of the receiver 2 by the aforementioned formulas (11) to (13) in which the square of the load voltage value $V_L$ of the receiver 2 proportional to the power transfer voltage value $V_t$ is divided by the load power value $P_L$ of the receiver 2, and control the power transfer voltage value $V_t$ such that the estimated load resistance value $R_L$ becomes the optimum load resistance value $R_O$. Furthermore, as hereinabove described, the controller 12 preferably is configured to estimate the load resistance value $R_L$ of the receiver 2 on the basis of the aforementioned formula (14) employing the voltage value $V_t$, the current value It, and the constant $\alpha$. Thus, the load resistance value $R_L$ of the receiver 2 can be easily estimated by the aforementioned formulas (11) to (14).

According to the first embodiment, as hereinabove described, the controller 12 is configured to set the product of the estimated load resistance value $R_L$ of the receiver 2 and the current value It as the power transfer voltage value $V_t$. Thus, the power transfer voltage value $V_t$ can be easily properly set simply by calculating the product of the load resistance value $R_L$ and the current value It.

According to the first embodiment, as hereinabove described, the controller 12 of the power transfer unit 1 is configured to determine that the load (such as the secondary battery 25) of the receiver 2 is in the abnormal state when the load power value $P_L$ of the receiver 2 is at least the minimum power value $P_A$ and the estimated load resistance value $R_L$ is not more than the minimum resistance value $R_A$. Furthermore, as hereinabove described, the controller 12 preferably is configured to control the power transfer voltage value $V_t$ such that the load power value $P_L$ of the receiver 2 obtained by multiplying the voltage value $V_t$ by the current value It is less than the minimum power value $P_A$ or the estimated load resistance value $R_L$ exceeds the minimum resistance value $R_A$. When the load of the receiver 2 is in the abnormal state (such as when the load is short-circuited), the load power value $P_L$ is relatively large while the load resistance value $R_A$ is relatively small. According to the aforementioned structure, abnormality of the load of the receiver 2 can be easily detected.

According to the first embodiment, as hereinabove described, the power transfer unit 1 is provided with the resonance capacitor 16 connected in series to the power transfer coil 11 and the coil current detector 19 capable of detecting the coil current value $I_c$ that is the current value of current that flows into the power transfer coil 11 and the resonance capacitor 16. Furthermore, the controller 12 of the power transfer unit 1 is configured to estimate the load power value $P_L$ of the receiver 2 by multiplying the voltage value $V_t$ by the current value It, and not to estimate the load resistance value $R_L$ of the receiver 2 but determine that the receiver is not arranged at the prescribed arrangement position when the estimated load power value $P_L$ is not more than the minimum power value $P_A$ and the coil current value $I_c$ is at least the maximum current value $I_A$. When the receiver 2 is not arranged at the prescribed arrangement position, the load power value $P_L$ is relatively small while the coil current value $I_c$ is relatively large. According to the aforementioned structure, it can be easily detected that the receiver 2 is not arranged at the prescribed arrangement position.

According to the first embodiment, as hereinabove described, the optimum load resistance value $R_O$ is a resistance value at which the power transfer efficiency value $\eta$ from the AC/DC power supply portion 13 to the receiver 2 is in the vicinity of the maximum value (power transfer efficiency value $\eta_O$). Thus, the power transfer voltage value is controlled such that the estimated load resistance value $R_L$ becomes the optimum load resistance value $R_O$, whereby the power transfer efficiency value $\eta$ can be in the vicinity of the maximum value (power transfer efficiency value $\eta_O$).

(Second Embodiment)

The structure of a wireless power transfer system 200 according to a second embodiment is now described with reference to Figs. 1 and 2. In this second embodiment, a load power value $P_L$ is estimated in consideration of a previously set power transfer efficiency value $\eta$ from an AC/DC power supply portion to a receiver, unlike the wireless power transfer system 100 according to the first embodiment in which the load power value $P_L$ is estimated assuming that the transferred power value $P_t$ is equal to the load power value $P_L$ (there is no loss).

As shown in Fig. 1, the wireless power transfer system 200 according to the second embodiment is provided with a power transfer unit 201. As shown in Fig. 2, the power transfer unit 201 includes a controller 212.

The controller 212 of the power transfer unit 201 is configured to control a power transfer voltage value $V_t$ in consideration of a previously set power transfer efficiency value $\eta$ (see Fig. 4) from an AC/DC power supply portion 13 to a receiver 2 such that the load resistance value $R_L$ of the receiver 2 becomes an optimum load resistance value $R_O$.

The controller 212 is configured to calculate a transferred power value $P_t$ by multiplying the power transfer voltage value $V_t$ by a transferred power current value $I_t$. Furthermore, the controller 212 is configured to estimate the load power value $P_L$ assuming that the receiver 2 receives the amount of power that corresponds to the previously set power transfer efficiency value $\eta$ from the AC/DC power supply portion 13 to the receiver 2. More specifically, the load power value $P_L$ is estimated on the basis of the power transfer voltage value $V_t$ and the transferred power current value It by the following formula (15).

$$V_t \times I_t = P_t = P_L/\eta \ ... \ (15)$$

The power transfer voltage value $V_t$ and a load voltage value $V_L$ have a relationship of the following formula (16) where $\beta$ is a constant and has a value that varies according to the structure of the power transfer unit 201 and the receiver 2.

$$V_t = \beta \times V_L \ ... \ (\beta: \ constant) \ ... \ (16)$$

Similarly to the wireless power transfer system 100 according to the first embodiment, the load voltage value $V_L$ is substantially constant regardless of the magnitude of the load power value $P_L$. Due to this relationship, the controller 212 can estimate the load resistance value $R_L$ by dividing the square of the load voltage value $V_L$ by the load power value $P_L$. Specifically, the following formula (17) is satisfied.

$$V_L^2/P_L = R_L \ ... \ (17)$$

More specifically, the following formula (18) can be derived from the aforementioned formulas (15) to (17).

$$R_L = (1/(\eta \cdot \beta^2)) \times (V_t/I_t) \ ... \ (18)$$

A method for controlling the power transfer voltage value $V_t$ using the estimated load resistance value $R_L$ performed by the controller 212 according to the second embodiment is similar to a method (see Fig. 7) for controlling the power transfer voltage value $V_t$ using the estimated load resistance value $R_L$ performed by the controller 12 according to the first embodiment. The remaining structure of the wireless power transfer system 200 according to the second embodiment is similar to that of the wireless power transfer system 100 according to the first embodiment.

According to the second embodiment, the following effects can be obtained.

According to the second embodiment, as hereinabove described, the controller 212 of the power transfer unit 201 is configured to control the power transfer voltage value $V_t$ in consideration of the previously set power transfer efficiency value $\eta$ from the AC/DC power supply portion 13 to the receiver 2 such that the load resistance value $R_L$ of the receiver 2 becomes the optimum load resistance value $R_O$. Furthermore, the controller 212 preferably is configured to estimate the load resistance value $R_L$ of the receiver 2 on the basis of the aforementioned formula (18) employing the voltage value $V_t$, the current value It, the constant $\beta$, and the power transfer efficiency value $\eta$ from the AC/DC power supply portion 13 to the receiver 2. Thus, the load resistance value $R_L$ (load power value $P_L$) of the receiver 2 can be more accurately estimated, and hence a reduction in the power transfer efficiency value $\eta$ can be more reliably suppressed. The remaining effects of the wireless power transfer system 200 according to the second embodiment are similar to those of the wireless power transfer system 100 according to the first embodiment.

(Third Embodiment)

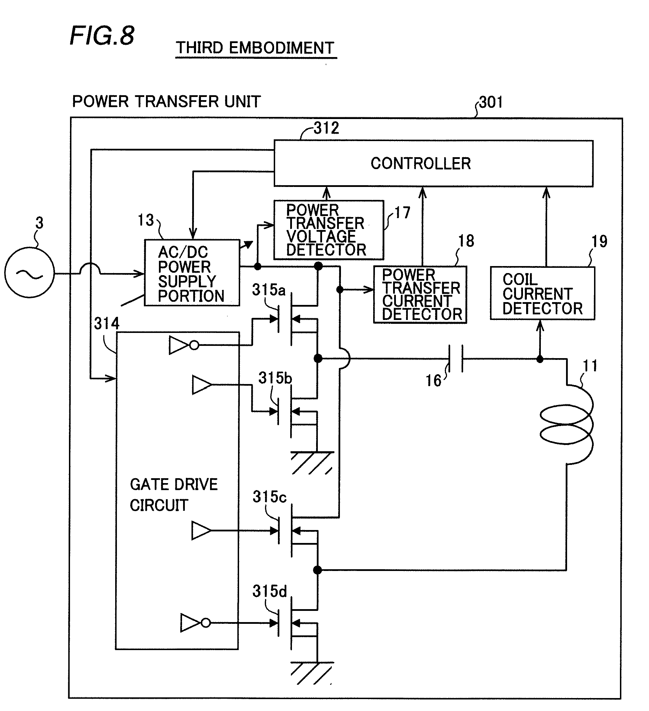

The structure of a wireless power transfer system 300 according to a third embodiment is now described with reference to Figs. 1 and 8. In this third embodiment, the wireless power transfer system 300 is provided with a so-called H-bridge type switching circuit constituted by a gate drive circuit and four FETs, unlike the wireless power transfer system 100 according to the first embodiment in which a so-called half bridge type switching circuit constituted by the gate drive circuit and the two FETs is provided.

As shown in Fig. 1, the wireless power transfer system 300 according to the third embodiment is provided with a power transfer unit 301. As shown in Fig. 8, the power transfer unit 301 includes a controller 312, a gate drive circuit 314, and N-type FETs 315a to 315d.

The drain of the FET 315a is connected to the output side of an AC/DC power supply portion 13. The source of the FET 315a and the drain of the FET 315b are connected to a resonance capacitor 16. The source of the FET 315b is grounded.

The drain of the FET 315c is connected to the output side of the AC/DC power supply portion 13. The source of the FET 315c and the drain of the FET 315d are connected to a power transfer coil 11. The source of the FET 315d is grounded.

The gates of the FETs 315a to 315d are connected to the gate drive circuit 314. Drive signals are input from the gate drive circuit 314 to the gates of the FETs 315a to 315d. In the gate drive circuit 314, signals for turning off the FETs 315b and 315c are input to the gates of the FETs 315b and 315c during input of signals for turning on the FETs 315a and 315d to the gates of the FETs 315a and 315d. Furthermore, in the gate drive circuit 314, signals for turning on the FETs 315b and 315c are input to the gates of the FETs 315b and 315c during input of signals for turning off the FETs 315a and 315d to the gates of the FETs 315a and 315d.

More specifically, the gate drive circuit 314 is constructed as a so-called H-bridge circuit, converts a DC voltage (voltage value $V_t$) from the AC/DC power supply portion 13 into an AC voltage (a rectangular wave having a voltage value $+V_t$ and a voltage value $-V_t$) having a resonant frequency, and outputs the AC voltage to the resonance capacitor 16 and the power transfer coil 11. The remaining structure of the wireless power transfer system 300 according to the third embodiment is similar to that of the wireless power transfer system 100 according to the first embodiment.

According to the third embodiment, the following effects can be obtained.

According to the third embodiment, as hereinabove described, the power transfer unit 301 is provided with the gate drive circuit 314 and the FETs 315a to 315d. Thus, the gate drive circuit 314 and the FETs 315a to 315d can be driven as the so-called H-bridge type switching circuit. Consequently, the magnitude of a power transfer voltage value supplied to the power transfer coil 11 can be doubled ($-V_t$ to $+V_t$) when power of a power transfer voltage value $V_t$ is supplied from the AC/DC power supply portion 13, as compared with the case where a half bridge type switching circuit is provided. In this case, a larger alternating current can flow into the power transfer coil 11, and hence a large power transfer magnetic field can be generated. The remaining effects of the wireless power transfer system 300 according to the third embodiment are similar to those of the wireless power transfer system 100 according to the first embodiment.

(Fourth Embodiment)

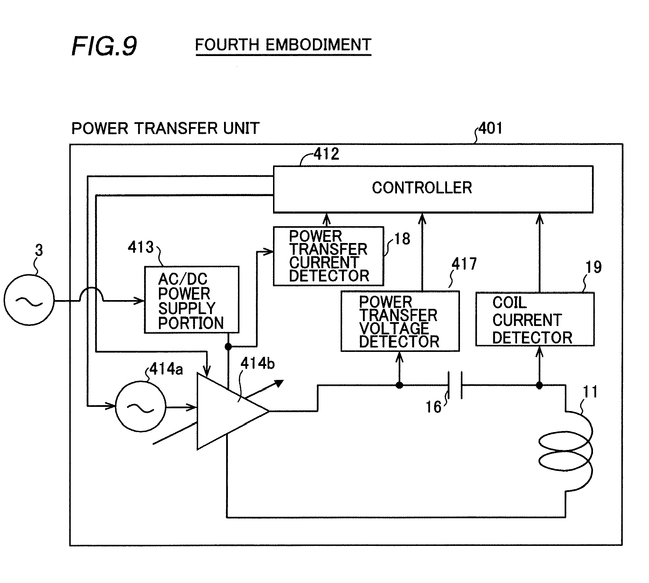

The structure of a wireless power transfer system 400 according to a fourth embodiment is now described with reference to Figs 1 and 9. In this fourth embodiment, the wireless power transfer system 400 is provided with a variable amplifier capable of amplifying a sine-wave alternating current, unlike the wireless power transfer system 100 according to the first embodiment in which a so-called switching circuit constituted by the gate drive circuit and the FETs is provided.

As shown in Fig. 1, the wireless power transfer system 400 according to the fourth embodiment is provided with a power transfer unit 401. As shown in Fig. 9, the power transfer unit 401 is provided with a controller 412, an AC/DC power supply portion 413, a sine-wave generator 414a, a variable amplifier 414b, and a power transfer voltage detector 417. The AC/DC power supply portion 413, the sine-wave generator 414a, and the variable amplifier 414b are examples of the "power supply portion" in the present invention.

The AC/DC power supply portion 413 outputs a constant voltage value, unlike the AC/DC power supply portion 13 according to the first embodiment. Furthermore, the AC/DC power supply portion 413 is connected to the variable amplifier 414b and supplies power to the variable amplifier 414b.

The sine-wave generator 414a acquires a drive signal from the controller 412 and outputs a sine wave having the same frequency (resonant frequency) as that of the acquired drive signal. The output side of the sine-wave generator 414a is connected to the input side of the variable amplifier 414b.

The variable amplifier 414b acquires the sine wave having the resonant frequency from the sine-wave generator 414a. Furthermore, the variable amplifier 414b amplifies the acquired sine wave to power having a power transfer voltage value $V_t$, employing power supplied from the AC/DC power supply portion 413 on the basis of a command from the controller 412. The output side of the variable amplifier 414b is connected to a resonance capacitor 16, and the variable amplifier 414b supplies power to the resonance capacitor 16 and a power transfer coil 11.

The power transfer voltage detector 417 is connected to the output side of the variable amplifier 414b and acquires the power transfer voltage value $V_t$. Furthermore, the power transfer voltage detector 417 transmits the acquired power transfer voltage value $V_t$ to the controller 412.

A method for controlling the power transfer voltage value $V_t$ performed by the controller 412 according to the fourth embodiment is similar to the method (see Fig. 7) for controlling the power transfer voltage value $V_t$ performed by the controller 12 according to the first embodiment. The remaining structure of the wireless power transfer system 400 according to the fourth embodiment is similar to that of the wireless power transfer system 100 according to the first embodiment.

According to the fourth embodiment, the following effects can be obtained.

According to the fourth embodiment, as hereinabove described, the power transfer unit 401 is provided with the AC/DC power supply portion 413, the sine-wave generator 414a, and the variable amplifier 414b. Thus, a sine-wave AC voltage can be applied to the power transfer coil 11. Consequently, high-frequency noise is hardly generated unlike the case where a switching circuit is employed, and hence an increase in electromagnetic interference of the high-frequency noise with a peripheral device can be suppressed. The remaining effects of the wireless power transfer system 400 according to the fourth embodiment are similar to those of the wireless power transfer system 100 according to the first embodiment.

The embodiments disclosed this time must be considered as illustrative in all points and not restrictive. The range of the present invention is shown not by the above description of the embodiments but by the scope of claims for patent, and all modifications within the meaning and range equivalent to the scope of claims for patent are further included.

For example, while the receiver according to the present invention is applied to the electric vehicle in each of the aforementioned first to fourth embodiments, the present invention is not restricted to this. According to the present invention, the receiver may alternatively be applied to other than the electric vehicle. The receiver may be applied to a portable telephone such as a smartphone.

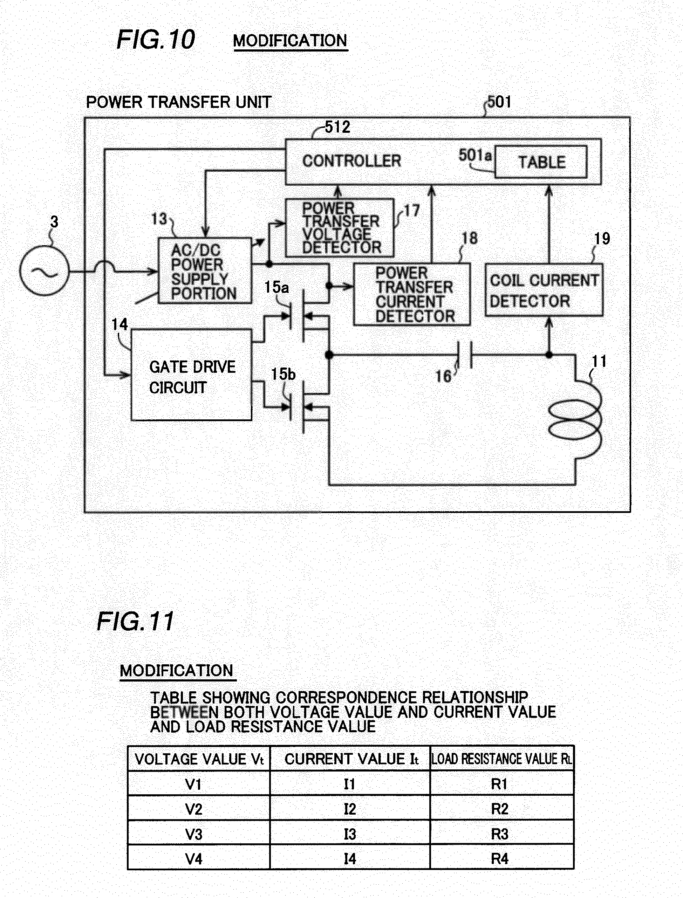

While the load resistance value is estimated by the aforementioned formulas (11) to (18) in each of the aforementioned first to fourth embodiments, the present invention is not restricted to this. According to the present invention, the load resistance value may alternatively be estimated without employing the aforementioned formulas (11) to (18). As in a power transfer unit 501 shown in a modification in Figs. 10 and 11, for example, a table 501a including load resistance values that correspond to acquired power transfer voltage values and acquired transferred power current values may alternatively be previously set, and the load resistance value may alternatively be estimated by the table 501a. Specifically, the power transfer unit 501 includes a controller 512 and the table 501a, and in the table 501a, a load resistance value $R_L$ calculated by the aforementioned formulas (11) to (18) is previously set for each voltage value $V_t$ and current value It. The controller 512 is configured to estimate a load resistance value $R_L$ on the basis of a voltage value $V_t$, a current value It, and the table 501a and control a power transfer voltage value $V_t$. Thus, the power transfer unit 501 can estimate the load resistance value $R_L$ of a receiver 2 simply by referring to the table 501a without performing a relatively complicated calculation.

While the load resistance value is estimated together with the estimation of the load power value, and the power transfer voltage value is controlled such that the estimated load resistance value becomes the optimum load resistance value (prescribed load resistance value) in each of the aforementioned first to fourth embodiments, the present invention is not restricted to this. According to the present invention, the load resistance value may alternatively be estimated without the estimation of the load power value, and the power transfer voltage value may alternatively be controlled such that the estimated load resistance value becomes the optimum load resistance value (prescribed load resistance value).

While the load resistance value is estimated after the estimation of the load power value in each of the aforementioned first to fourth embodiments, the present invention is not restricted to this. According to the present invention, the load resistance value may alternatively be estimated before the estimation of the load power value.

While the power transfer unit according to the present invention includes one power transfer coil in each of the aforementioned first to fourth embodiments, the present invention is not restricted to this. According to the present invention, a power transfer unit including a plurality of power transfer coils may alternatively be employed.

While the DC/DC converter is employed as the power converter of the receiver according to the present invention in each of the aforementioned first to fourth embodiments, the present invention is not restricted to this. According to the present invention, a power converter other than the DC/DC converter may alternatively be employed as the power converter of the receiver. In the case where the load is driven by AC power, for example, a DC/AC inverter may be employed as the power converter of the receiver.

While the two resonance capacitors are connected in series to and in parallel to the power receiving coil in the receiver according to the present invention in each of the aforementioned first to fourth embodiments, the present invention is not restricted to this. According to the present invention, one or more than two resonance capacitors may alternatively be connected to the power receiving coil in the receiver 2. For example, according to the impedance of the load, one resonance capacitor may be connected in parallel to the power receiving coil, or one resonance capacitor may be connected in series to the power receiving coil.

While a numerical example (410 Ω, for example) of the prescribed load resistance value or the like according to the present invention is offered in each of the aforementioned first to fourth embodiments, the present invention is not restricted to this. According to the present invention, it is only required to control the power transfer voltage value such that the estimated load resistance value becomes a prescribed load resistance value (a value other than 410 Ω) set according to the structure of the power transfer unit or the receiver.

While the processing operations performed by the controller according to the present invention are described, using the flowchart described in a flow-driven manner in which processing is performed in order along a processing flow for the convenience of illustration in each of the aforementioned first to fourth embodiments, the present invention is not restricted to this. According to the present invention, the processing operations performed by the controller may alternatively be performed in an event-driven manner in which processing is performed on an event basis. In this case, the processing operations performed by the controller may be performed in a complete event-driven manner or in a combination of an event-driven manner and a flow-driven manner.

As hereinabove described, a power transfer unit (1, 201, 301, 401, 501) includes a power supply portion (13, 413), a power transfer portion (11), a voltage detector (17, 417), a power transfer current detector (18), and a controller (12, 212, 312, 412, 512), and the controller is configured to control a power transfer voltage value on the basis of an output voltage value detected by the voltage detector and an output current value detected by the power transfer current detector.

**Claims**

1. A power transfer unit (1, 201, 301, 401, 501) comprising:

   a power supply portion (13, 413);
   a power transfer portion (11) that supplies power to an external device (2) by power supplied by the power supply portion;
   a voltage detector (17, 417) that detects an output voltage value of the power supply portion;
   a power transfer current detector (18) that detects an output current value of the power supply portion; and
   a controller (12, 212, 312, 412, 512) that controls a power transfer voltage value of the power supply portion, wherein
   the controller is configured to control the power transfer voltage value based on the output voltage value detected by the voltage detector and the output current value detected by the power transfer current detector.

2. The power transfer unit according to claim 1,
   wherein
   the controller is configured to estimate a load resistance value of the external device based on the output voltage value and the output current value.

3. The power transfer unit according to claim 1 or 2,
   wherein
   the controller is configured to:

   calculate a load power value $P_L$ of the external device by multiplying the output voltage value $V_t$ by the output current value It,
   estimate a load resistance value $R_L$ of the external device by following formulas (1) to (3):

$$V_t \times I_t = P_L \ldots (1)$$

$$V_t = \alpha \times V_L \ldots (\alpha: constant) \ldots (2)$$

$$V_L{}^2/P_L = R_L \ldots (3)$$

in which a square of a load voltage value $V_L$ of the external device proportional to the output voltage value $V_t$ is divided by the load power value $P_L$ of the external device, and
control the power transfer voltage value such that the load resistance value $R_L$ that is estimated becomes a prescribed load resistance value.

4. The power transfer unit according to claim 3, wherein
the controller is configured to estimate the load resistance value $R_L$ of the external device based on a following formula (4):

$$R_L = (1/\alpha^2) \times (V_t/I_t) \dots (4)$$

where the output voltage value $V_t$, the output current value It, and a constant $\alpha$ are employed.

5. The power transfer unit according to claim 3, wherein
the controller is configured to estimate the load resistance value $R_L$ of the external device based on a following formula (5):

$$R_L = (1/(\eta \cdot \beta^2)) \times (V_t/I_t) \dots (5)$$

where the output voltage value $V_t$, the output current value It, a constant $\beta$, and a power transfer efficiency value $\eta$ from the power supply portion to the external device are employed.

6. The power transfer unit according to any of claims 2 to 5, wherein
the controller is configured to set a product of the load resistance value of the external device that is estimated and the output current value as the power transfer voltage value.

7. The power transfer unit according to any of claims 2 to 6, wherein
the controller is configured to determine that a load of the external device is in an abnormal state when a load power value of the external device obtained by multiplying the output voltage value $V_t$ by the output current value It is at least a prescribed power value and the load resistance value that is estimated is not more than a prescribed minimum resistance value.

8. The power transfer unit according to any of claims 2 to 7, wherein
the controller is configured to control the output voltage value based on a previously set power transfer efficiency from the power supply portion to the external device such that the load resistance value of the external device becomes a prescribed load resistance value.

9. The power transfer unit according to any of claims 2 to 8, wherein
the power transfer portion includes a power transfer coil (11) and a resonance capacitor (16) connected to the power transfer coil,
the power transfer unit further comprising a coil current detector (19) that detects a coil current value that is a current value of current that flows into the power transfer coil and the resonance capacitor, wherein
the controller is configured to estimate a load power value of the external device by multiplying the output voltage value by the output current value and determine whether or not to estimate the load resistance value of the external device based on the load power value and the coil current value.

10. The power transfer unit according to claim 9, wherein
the resonance capacitor is connected in series to the power transfer coil, and
the controller is configured not to estimate the load resistance value of the external device but determine that the external device is not arranged at a prescribed arrangement position when the load power value that is estimated is not more than a prescribed power value and the coil current value is at least a prescribed current value.

**11.** The power transfer unit according to claim 10,
wherein
the controller is configured to increase the power transfer voltage value when the coil current value is less than the prescribed current value.

**12.** The power transfer unit according to any of claims 2 to 11, wherein
the controller is configured to control the power transfer voltage value such that the load resistance value that is estimated becomes a prescribed load resistance value, and
the prescribed load resistance value is a resistance value at which a power transfer efficiency value from the power supply portion to the external device is in the vicinity of a maximum value.

**13.** The power transfer unit according to any of claims 2 to 12, wherein
the controller is configured to control the power transfer voltage value such that a load power value of the external device obtained by multiplying the output voltage value $V_t$ by the output current value It is less than a prescribed power value or the load resistance value that is estimated exceeds a prescribed minimum resistance value.

**14.** The power transfer unit according to any of claims 2 to 13, wherein
the controller is configured to increase the power transfer voltage value when the load resistance value that is estimated is smaller than a prescribed load resistance value and reduce the power transfer voltage value when the load resistance value that is estimated is larger than the prescribed load resistance value.

**15.** The power transfer unit according to claim 2,
wherein
the controller is configured to estimate the load resistance value of the external device by a table (501a) that shows a correspondence relationship between both the output voltage value and the output current value and the load resistance value of the external device.

FIG.1

ELECTRIC VEHICLE 2a

POWER RECEIVING COIL 21

RECEIVER 2

POWER TRANSFER COIL 11

POWER TRANSFER UNIT 1 (201, 301, 401)

100 (200, 300, 400)

## FIG.2

FIRST EMBODIMENT (SECOND EMBODIMENT)

POWER TRANSFER UNIT 1(201)

12(212)

CONTROLLER

3

13

AC/DC POWER SUPPLY PORTION

POWER TRANSFER VOLTAGE DETECTOR 17

15a

POWER TRANS-FER CURRENT DETECTOR 18

COIL CURRENT DETECTOR 19

14

GATE DRIVE CIRCUIT

15b

16

11

## FIG.3

RECEIVER 2

## FIG.4

FIG.5

FIG.6

## FIG.7 CONTROL PROCESSING FLOW FOR POWER TRANSFER VOLTAGE VALUE

POWER TRANSFER UNIT

( START )

S1
SET INITIAL VALUE OF POWER TRANSFER VOLTAGE VALUE

S2
START POWER TRANSFER

(A)

S3
MEASURE VOLTAGE VALUE, CURRENT VALUE, AND COIL CURRENT VALUE

S4
ESTIMATE LOAD POWER VALUE

S5
ESTIMATED LOAD POWER VALUE IS NOT MORE THAN MINIMUM POWER VALUE? — Yes →

S11
COIL CURRENT VALUE IS AT LEAST MAXIMUM CURRENT VALUE? — No →

No ↓

S6
ESTIMATE LOAD RESISTANCE VALUE

Yes ↓

S12
DETERMINE THAT RECEIVER IS NOT ARRANGED AT PRESCRIBED ARRANGEMENT POSITION

S7
ESTIMATED LOAD RESISTANCE VALUE IS NOT MORE THAN MINIMUM RESISTANCE VALUE? — Yes →

S13
DETERMINE THAT LOAD IS IN ABNORMAL STATE

No ↓

( END )

S8
ESTIMATED LOAD RESISTANCE VALUE IS NOT MORE THAN OPTIMUM RESISTANCE VALUE? — Yes →

No ↓

S9
REDUCE POWER TRANSFER VOLTAGE VALUE

S14
DETERMINE THAT TRANSFERRED POWER IS INSUFFICIENT

S10
INCREASE POWER TRANSFER VOLTAGE VALUE

(A)

# FIG.8

THIRD EMBODIMENT

POWER TRANSFER UNIT

*FIG.9*     FOURTH EMBODIMENT

POWER TRANSFER UNIT            401

*FIG.10*    MODIFICATION

POWER TRANSFER UNIT                                                     501

*FIG.11*

MODIFICATION

TABLE SHOWING CORRESPONDENCE RELATIONSHIP
BETWEEN BOTH VOLTAGE VALUE AND CURRENT VALUE
AND LOAD RESISTANCE VALUE

| VOLTAGE VALUE $V_t$ | CURRENT VALUE $I_t$ | LOAD RESISTANCE VALUE $R_L$ |
|---|---|---|
| V1 | I1 | R1 |
| V2 | I2 | R2 |
| V3 | I3 | R3 |
| V4 | I4 | R4 |

Europäisches
Patentamt

European
Patent Office

Office européen
des brevets

## EUROPEAN SEARCH REPORT

Application Number

EP 15 17 6219

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/167523 A1 (TAMAKI KAZUTAKA [JP] ET AL) 19 June 2014 (2014-06-19)<br>* paragraph [0028] - paragraph [0029]; figure 11 * | 1-15 | INV.<br>H02J5/00<br>H02J17/00 |
| X | WO 2013/128641 A1 (HITACHI LTD [JP]; KAWAGUCHI YUKI [JP]; SHIMADA TAKAE [JP]; KANOUDA AKI) 6 September 2013 (2013-09-06)<br>* paragraph [0013] - paragraph [0014]; figure 1 * | 15 | |
| X | JP 2014 110733 A (TDK CORP) 12 June 2014 (2014-06-12)<br>* paragraph [0064]; figures 1,4 * | 1-15 | |

TECHNICAL FIELDS
SEARCHED    (IPC)

H02J

The present search report has been drawn up for all claims

| Place of search | Date of completion of the search | Examiner |
|---|---|---|
| Munich | 6 November 2015 | Ramcke, Ties |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .......................................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 15 17 6219

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2015

| Patent document cited in search report | | Publication date | Patent family member(s) | | Publication date |
|---|---|---|---|---|---|
| US 2014167523 | A1 | 19-06-2014 | JP<br>US | 2014140290 A<br>2014167523 A1 | 31-07-2014<br>19-06-2014 |
| WO 2013128641 | A1 | 06-09-2013 | TW<br>WO | 201340529 A<br>2013128641 A1 | 01-10-2013<br>06-09-2013 |
| JP 2014110733 | A | 12-06-2014 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2002272134 A